# EUROPEAN PATENT SPECIFICATION

(11) **EP 2 298 127 B1**
(45) Date of publication and mention of the grant of the patent: **05.10.2016**
(21) Application number: 10173674.2
(22) Date of filing: 23.08.2010
(51) Int. Cl.: A47B 19/08, A47B 5/00

(54) **Folding reading desk**
Zusammenklappbares Lesepult
Bureau de lecture pliable

(30) Priority: 18.09.2009 ES 200901869
(43) Date of publication of application: 23.03.2011
(73) Proprietor: Figueras International Seating S.L., 08186 Lliçá d'Amunt (Barcelona) (ES)
(72) Inventor: Figueras Mitjans, Jose, 08186, LLIÇÁ D'AMUNT, BARCELONA (ES)
(74) Representative: Intès, Didier Gérard André

(56) References cited:
- DE-C1- 4 237 855
- FR-A1- 2 869 514

## Description

### Field of the Art

The present invention relates to the conditioning of the seating places of the attendees in congress halls, conference rooms and places of similar activities, proposing a reading desk structured with embodiment features making it advantageous for those applications.

### State of the Art

In congress halls, conference rooms and other places of similar activities, it is usual to fit out the seating places of the attendees with a desk allowing the user to support papers, documents or objects.

In the seats of attendees, which are normally arranged distributed in rows in front of the speaker's post or a point on which the attendees must focus their attention, the solution of incorporating folding boards in an assembly on the armrest structures of the seats is known, which is generally uncomfortable due to the movement limitations and the unease caused to the users of the seats.

Another known solution consists of arranging boards in a folding assembly on the backrest of the seats, for the use by the users of the seats located behind, which has an application drawback due to the fact that the seats are usually placed in a staggered arrangement and in a stepped situation in the successive rows, such that the backrest of the seats does not exactly face the respective seats of the row located behind it.

US 3 583 760 A discloses a table frame with table members which are stowed in the table frame.

### Object of the Invention

According to the invention, a reading desk is proposed, with a structural embodiment providing highly advantageous functionality features for the mentioned application in the seating places of attendees, solving in a practical manner the drawbacks of conventional arrangements.

The reading desk object of the invention comprises a support structure formed by two legs, between which there are arranged two mutually facing boards which determine a cavity in which a worktop board of the desk can be introduced and extracted, there being inside the cavity a central board to which the worktop board is assembled by means of a sliding system and a braking system.

The sliding system comprises a guide fixed on the central board of the support structure and a sliding carriage on said guide which is fixed to a securing support articulated on the worktop board.

The braking system consists of a rack fixed onto the central board of the support structure and a pinion associated with a rotating braking system which is fixed onto the securing support articulated to the worktop board.

A desk is thus obtained which allows the sliding of the worktop board between a vertical concealment position inside the cavity of the support structure and an extracted position, in which said worktop board can be placed in a horizontal or slightly inclined manner, by means of the rotation with respect to the articulation on the securing support, the braking system exerting a retention of the movement in the sliding towards the inside of the cavity of the support structure, such that it prevents a fall with an abrupt stop blow in said movement.

The desk thus formed is easy to install in any place, both in an independent manner and in relation to seats, for the use by the users of said seats, without any structural dependence either of the seat itself or of the other seats, such that the arrangement of the desk does not affect or condition the distribution of the seats in any relative position between them.

The structural arrangement of this desk furthermore determines that in the folded position the worktop board is completely concealed inside the support structure, whereby a very suitable aesthetic appearance of the desk in that folded position is achieved.

Therefore, the proposed desk has truly advantageous features, acquiring its own identity and a preferred character for the application for which it is intended.

### Description of the Drawings

Figure 1 shows a perspective view of the proposed reading desk, in an unfolded use position.
Figure 2 is an exploded perspective view of the structural assembly of the desk.
Figure 3 is a sectioned side view of the desk in the unfolded use position.
Figure 4 is a sectioned side view of the desk in a folded position.

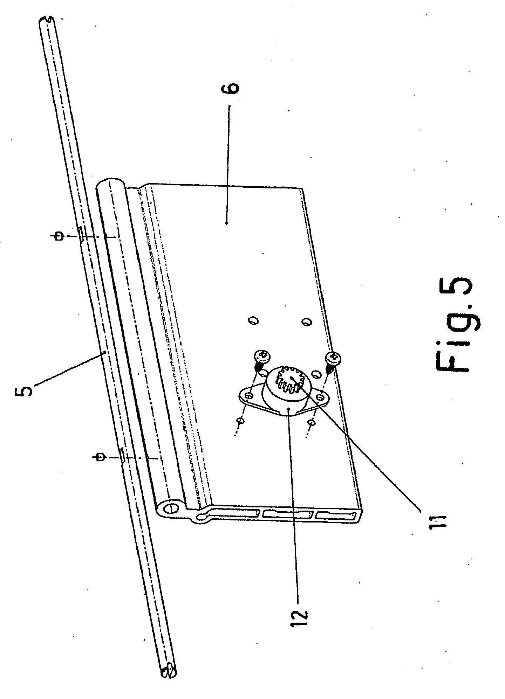

Figure 5 is a perspective view of the securing support on which the worktop board of the desk is articulated.

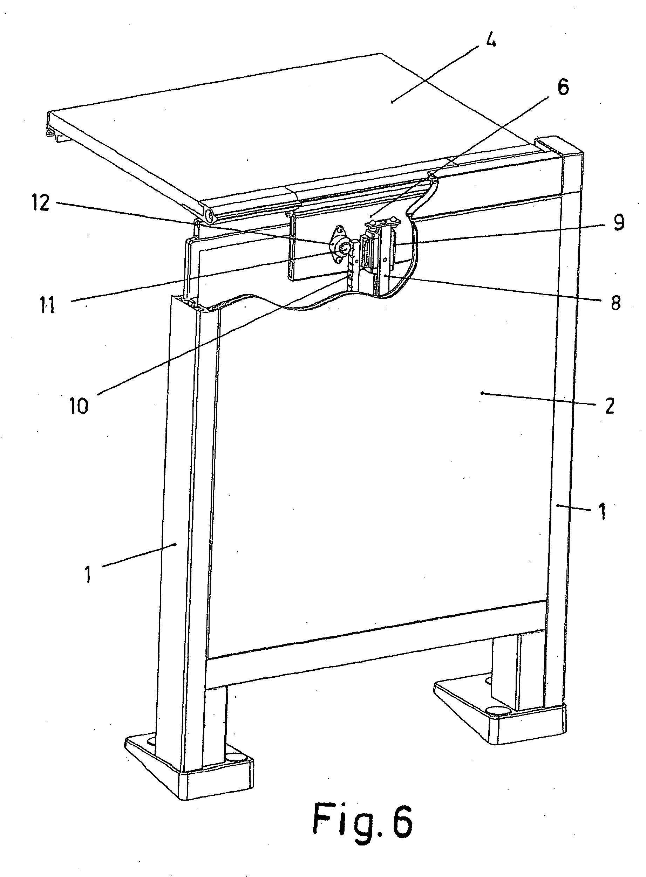

Figure 6 is a perspective view of the unfolded reading desk seen by the rear part, with a partial cutaway of the support structure, in which the securing of the worktop board is observed.

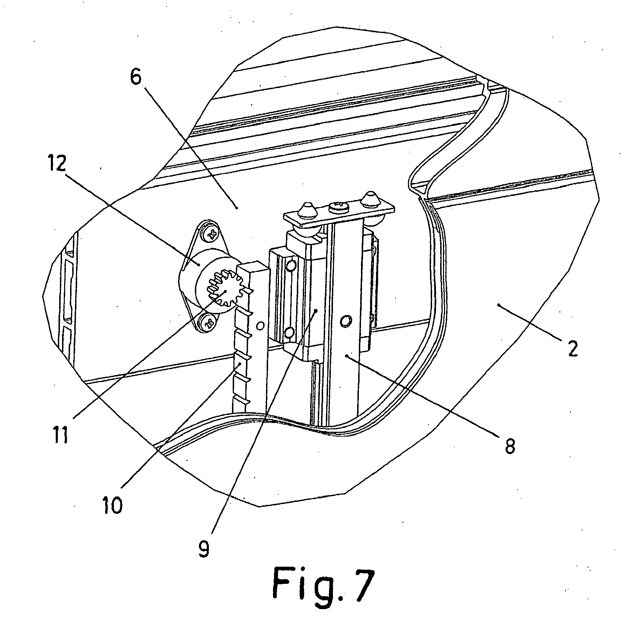

Figure 7 is an enlarged detail of the securing of the worktop board of the desk.
Figure 8 is a perspective view of the reading desk in an unfolded position, according to an embodiment with electric and audio equipment.

### Detailed Description of the Invention

The object of the invention relates to a reading desk which is applicable to any place, both in an independent manner and in relation to seats, in congress halls, conference rooms or any place of similar activities.

The proposed desk comprises a support structure which is made up of two legs (1), between which there are arranged two mutually facing boards (2 and 3), which determine a cavity in which a worktop board (4) can be introduced and extracted.

Said worktop board (4) is coupled in an articulated manner, by means of a shaft (5), to a support (6), through which it is joined in an assembly, by means of a sliding system and a braking system, to a central board (7) arranged inside the cavity comprised between the mutually facing boards (2 and 3) of the support structure.

The sliding system comprises a guide (8) which is fixed on the central board (7) of the inside of the support structure, and a carriage (9) which is coupled in a sliding assembly on said guide (8) and fixed on the support (6) of the worktop board (4).

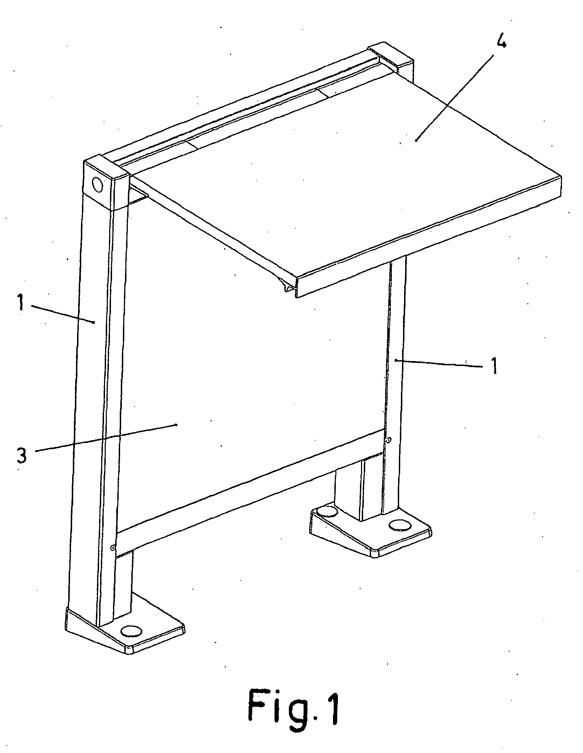

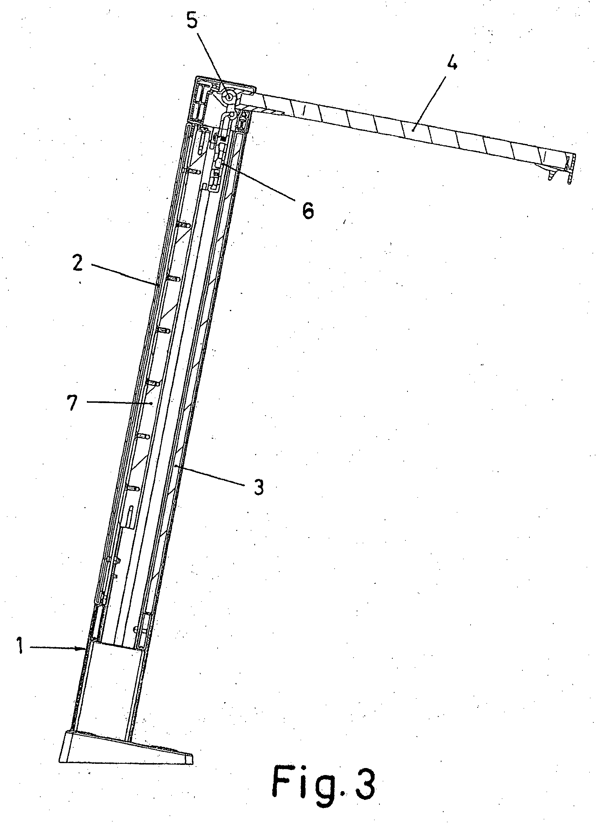

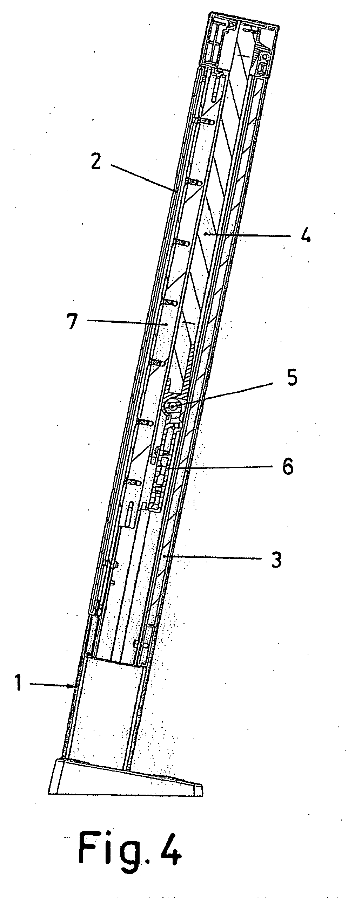

Thus, the worktop board (4) can be pivoted by rotating around the articulation with respect to the support (6) to place said worktop board (4) in a horizontal or slightly inclined manner in the use position of the desk, as depicted in Figures 1 and 3, or to vertically introduce it in the cavity comprised between the mutually facing boards (2 and 3) of the support structure, in a folded desk position, in which said worktop board (4) is completely concealed inside the support structure, as observed in Figure 4.

In order to prevent that, during the insertion in the housing cavity inside the support structure, the worktop board (4) falls freely and abruptly collides with the insertion stop, the sliding system is complemented by a braking system comprising a vertical rack (10) fixed onto the central board (7) of the support structure of the desk and, meshing with said rack (10), a pinion (11) associated with a rotating braking mechanism (12), which is fixed onto the support (6) of the worktop board (4).

Thus, for the insertion of the worktop board (4) inside the support structure, it is enough to pivot said worktop board (4) to the vertical position, from which it falls by its own weight into the support structure, but in the falling movement, which is driven by the guiding system, the pinion (11) runs over the rack (10), the rotation of said pinion (11) being braked by the mechanism (12), whereby the worktop board (4) falls smoothly, reaching the lower stop without colliding abruptly.

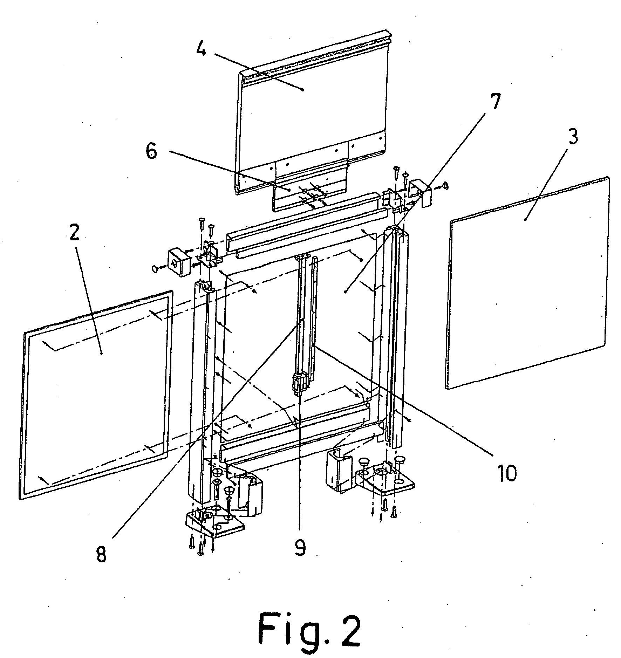

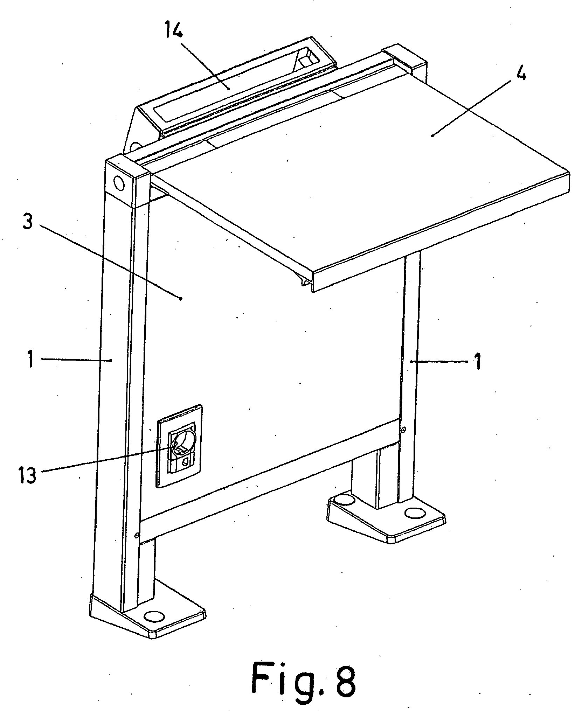

The structural assembly of the reading desk, with the proposed arrangement for folding and unfolding the worktop board (4), according to the described manner, can be determined in a simple desk assembly, as in the embodiment of Figures 1 to 4, but likewise, without the concept of the assembly being altered, electric equipment with sockets (13) as well as voice and data transmission equipment (14) can be incorporated in the structural assembly, as in the embodiment of Figure 8, the depicted embodiment being only a practical non-limiting example.

## Claims

1. A folding reading desk, incorporating a worktop board (4) which can be placed in a use position and in a folded position, and further comprising a support structure which comprises two legs (1), between which there are arranged two mutually facing boards (2 and 3) which determine an intermediate cavity, in which the worktop board (4) can be introduced and extracted, and it also comprises a central board (7), which is arranged in said intermediate cavity between the mutually facing boards (2 and 3) of the support structure, **characterized in that** said worktop board being coupled in an assembly by means of a sliding system and a braking system to said central board (7).

2. The folding reading desk according to claim 1, **characterized in that** the worktop board (4) is joined, by means of an articulation shaft (5), to a support (6), by means of which the assembly coupling to the central board (7) of the support structure is established, the worktop board (4) being able to pivot between a horizontal or slightly inclined position and a vertical position, by means of the rotation on the articulation with respect to the support (6).

3. The folding reading desk according to claims 1 and 2, **characterized in that** the sliding system of the assembly of the worktop board (4) comprises a guide (8) which is fixed on the central board (7) of the support structure and a carriage (9) which is fixed to the support (6) of the worktop board (4) and coupled in a sliding assembly on the mentioned guide (8).

4. The folding reading desk according to claims 1 and 2, **characterized in that** the braking system of the assembly of the worktop board (4) comprises a rack (10) which is fixed onto the central board (7) of the support structure and a pinion (11) meshing on said rack and associated with a rotating braking mechanism (12) which is fixed onto the support (6) of the worktop board (4).

## Patentansprüche

1. Zusammenklappbares Lesepult, umfassend eine Arbeitsplatte (4), die in eine Nutzungsposition und in eine zusammengeklappte Position gebracht werden kann, und ferner umfassend eine Stützstruktur, die zwei Beine (1) umfasst, zwischen denen zwei einander zugewandte Platten (2 und 3) angeordnet sind, die einen dazwischenliegenden Hohlraum definieren, in den die Arbeitsplatte (4) eingebracht und aus dem sie herausgezogen werden kann, und es umfasst ebenfalls eine mittlere Platte (7), die in dem zwischen den einander zugewandten Platten (2 und 3) liegenden Hohlraum der Stützstruktur angeordnet ist, **dadurch gekennzeichnet, dass** die Arbeitsplatte in einer Anordnung mittels eines Gleitsystems und eines Bremssystems mit der mittleren Platte (7) verbunden ist.

2. Zusammenklappbares Lesepult nach Anspruch 1, **dadurch gekennzeichnet, dass** die Arbeitsplatte (4) mittels einer Gelenkwelle (5) mit einer Stützvorrichtung (6) verbunden ist, wodurch die Anordnungsverbindung mit der mittleren Platte (7) der Stützstruktur hergestellt wird, wobei die Arbeitsplatte (4) mittels der Drehung auf dem Gelenk in Bezug auf die Stützvorrichtung (6) zwischen einer waagerechten oder leicht geneigten Position und einer senkrechten Position hin- und herschwenken kann

3. Zusammenklappbares Lesepult nach Anspruch 1 und 2, **dadurch gekennzeichnet, dass** das Gleitsystem der Anordnung der Arbeitsplatte (4) eine Führung (8), die an der mittleren Platte (7) der Stützstruktur befestigt ist, und einen Schlitten (9) umfasst, der an der Stützvorrichtung der Arbeitsplatte (4) befestigt und in einer Gleitanordnung auf der Führung (8) befestigt ist.

4. Zusammenklappbares Lesepult nach Anspruch 1 und 2, **dadurch gekennzeichnet, dass** das Bremssystem der Anordnung der Arbeitsplatte (4) eine Zahnstange (10), die auf der mittleren Platte (7) der Stützstruktur befestigt ist, und ein Zahnrad (11) umfasst, das in die Zahnstange eingreift und mit einem sich drehenden Bremsmechanismus (12) verbunden ist, der an der Stützvorrichtung (6) der Arbeitsplatte (4) befestigt ist.

## Revendications

1. Bureau pliable de lecture intégrant une plaque de table de travail (4) qui peut être placée dans une position d'utilisation et dans une position pliée et comprenant en outre une structure de support comprenant deux jambes (1), entre lesquelles sont disposées deux plaques (2 et 3) se faisant mutuellement face qui délimitent une cavité intermédiaire dans laquelle la plaque de table de travail (4) peut être introduite et extraite, et comprenant également une plaque centrale (7) disposée dans ladite cavité intermédiaire entre les plaques (2 et 3) se faisant mutuellement face de la structure de support, **caractérisé en ce que** ladite plaque de table de travail est couplée dans un ensemble, au moyen d'un système de coulissement et d'un système de freinage, à ladite plaque centrale (7).

2. Bureau pliable de lecture selon la revendication 1, **caractérisé en ce que** la plaque de table de travail (4) est jointe, au moyen d'un arbre d'articulation (5), à un support (6), grâce auquel le couplage d'ensemble de la plaque centrale (7) de la structure de support est établi, la plaque de table de travail (4) étant en mesure de pivoter entre une position horizontale ou légèrement inclinée et une position verticale, au moyen de la rotation sur l'articulation par rapport au support (6).

3. Bureau pliable de lecture selon la revendication 1 et 2, **caractérisé en ce que** le système de coulissement de l'ensemble de la plaque de table de travail (4) comprend un guide (8) fixé sur la plaque centrale (7) de la structure de support et un chariot (9) fixé sur le support (6) de la plaque de table de travail (4) et couplé dans un ensemble de coulissement sur le guide (8) mentionné.

4. Bureau pliable de lecture selon la revendication 1 et 2, **caractérisé en ce que** le système de freinage de l'ensemble de la plaque de table de travail (4) comprend une crémaillère (10) fixée sur la plaque centrale (7) de la structure de support et un pignon (11) engrenant ladite crémaillère et associé à un mécanisme de freinage rotatif (12) fixé sur le support (6) de la plaque de table de travail (4).
